Europäisches Patentamt

European Patent Office

Office européen des brevets

(11) Veröffentlichungsnummer: **0 425 732 A1**

## (12) EUROPÄISCHE PATENTANMELDUNG

(21) Anmeldenummer: 89120389.5

(22) Anmeldetag: 03.11.89

(51) Int. Cl.⁵: **H04J 14/08**, H04B 10/20

Geänderte Patentansprüche gemäss Regel 86 (2) EPÜ.

(43) Veröffentlichungstag der Anmeldung:
**08.05.91 Patentblatt 91/19**

(84) Benannte Vertragsstaaten:
**AT BE CH DE FR GB IT LI NL SE**

(71) Anmelder: **Siemens Aktiengesellschaft Wittelsbacherplatz 2 W-8000 München 2(DE)**

(72) Erfinder: **Schaffer, Bernhard, Dipl.-Phys. Planegger Strasse 15 W-8035 Gauting(DE)**

(54) **Passives optisches Telekommunikationssystem.**

(57) In einem passiven optischen Telekommunikationssystem, in dem jeweils eine Mehrzahl von Teilnehmerstellen über eine eigene LWL-Teilnehmeranschlußleitung an einen optischen Verzweiger angeschlossen ist, der über einen LWL-Bus mit einem gemeinsamen LWL-Anschluß der Vermittlungsstelle verbunden ist, geht die Signalübertragung von der Vermittlungsstelle aus abwärts zu den Teilnehmerstellen hin in einem ATM-Zellenstrom vor sich, aus dem jede Teilnehmerstelle nur die an sie adressierten ATM-Zellen aufnimmt; die Signalübertragung von den Teilnehmerstellen aus aufwärts zur Vermittlungsstelle hin geht in einem TDMA-Verfahren mit ATM-Zellen vor sich, demzufolge eine Teilnehmerstelle jeweils nur nach vorheriger Aufnahme einer ATM-Zelle ihrerseits eine ATM-Zelle aussendet, und zwar mit einer solchen teilnehmerindividuell bemessenen Verzögerungszeit, daß sich für alle Teilnehmerstellen die gleiche vorgegebene Schleifenlaufzeit ergibt.

## PASSIVES OPTISCHES TELEKOMMUNIKATIONSSYSTEM

Neuere Entwicklungen der Fernmeldetechnik führen zu diensteintegrierenden Digitalnetzen (ISDN), die in der Ebene der Teilnehmeranschlußleitungen eine Sternstruktur von Lichtwellenleitern aufweisen; solche mit Lichtwellenleitern ausgestattete diensteintegrierende Digitalnetze (ISDN) sind grundsätzlich für Schmalband-und Breitband-Dienste geeignet (DE-PS 24 21 002).

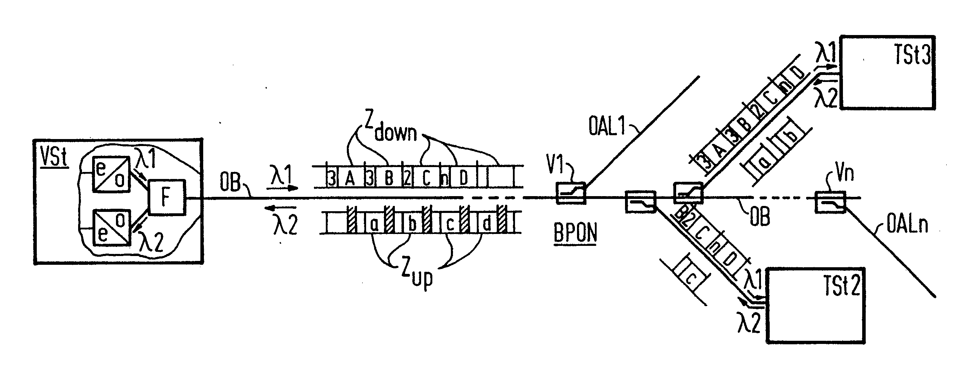

In einem Sternnetz von Lichtwellenleiter-Teilnehmeranschlußleitungen ist, sofern man nicht elektrische Vorfeldeinrichtungen vorsieht, für jeden Teilnehmer eine teilnehmerindividuelle, zwischen Teilnehmerstelle und Vermittlungsstelle verlaufende Lichtwellenleiter-Teilnehmeranschlußleitung vorge- sehen. Solche teilnehmerindividuell zwischen Teil- nehmerstelle und Vermittlungsstelle verlaufende Teilnehmeranschlußleitungen vermeiden (topologisch ggf. als Sternnetz erscheinende) Lichtwellenleiter-Busnetze (siehe z.B. Zürich Seminar 1978, Conf. Paper A6.1...7, FIG 3), die indessen im allgemeinen relativ komplizierte Buszugriffsverfahren mit sich bringen.

Um sowohl ein kompliziertes Buszugriffsverfahren als auch von der Vermittlungsstelle ausgehende Lichtwellenleiter-Teilnehmeranschlußleitungen zu vermeiden, ist es (aus EP-A2-0 171 080) be- kannt, in einem diensteintegrierenden Telekommu- nikationssystem, in dem Teilnehmerstellen über Lichtwellenleiter-Anschlußleitungen an eine Vermittlungsstelle angeschlossen sind, jeweils eine Mehrzahl von Teilnehmerstellen jeweils über eine eige- ne Lichtwellenleiter-Teilnehmeranschlußleitung le- diglich an einen gemeinsamen optischen Verzweiger anzuschließen, der seinerseits an eine Multiplexanschlußschaltung der Vermittlungsstelle über eine verzweigerindividuelle Lichtwellenleiter-Anschlußleitung angeschlossen ist, wobei die Signalübertragung von der Vermittlungsstelle zu den Teilnehmerstellen hin in einem ISDN-Basisanschluß- (BA-) Multiplexrahmen vor sich geht und die Signalübertragung von den Teilnehmerstellen aus zur Vermittlungsstelle hin jeweils in dem der jeweiligen Teilnehmerstelle zugeordneten Zeitkanal des ISDN- Basisanschluß-Multiplexrahmens in Bursts solcher Dauer und Zeitlage vor sich geht, daß auf der verzweigerindividuellen Lichtwellenleiter-Anschlußleitung ein über die Lichtwellenleiter-Teilnehmeranschlußleitung maximaler Laufzeit übertragener Burst sich noch nicht mit dem im Multiplexrahmen nachfolgenden Burst überschneidet und ein über die Lichtwellenleiter-Teilnehmeranschlußleitung minimaler Laufzeit übertragener Burst sich noch nicht mit dem im Multiplexrahmen vorangehenden Burst überschneidet.

Dabei kann die Burstdauer höchstens gleich der um das Doppelte der Differenz zwischen maximaler und minimaler Laufzeit verringerten Zeitfachdauer sein, was es gestattet, daß die Bursts von den einzelnen Teilnehmerstellen aus jeweils mit der gleichen Zeitlage innerhalb des jeweiligen Zeitfachs abgesandt werden; es ist aber auch möglich, daß die Bursts von den einzelnen Teilnehmerstellen jeweils in einer solchen teilnehmerstellenindividuellen Zeitlage abgesandt werden, daß auf der verzweiger-individuellen Lichtwellenleiter-Anschlußleitung die einzelnen Bursts in zumindest angenähert gleichen Abständen aufeinanderfolgen, was eine Verlängerung der Bursts und damit eine Verringerung der Bitrate innerhalb der Bursts und/oder die Bewältigung größerer Längen- bzw. Laufzeitunterschiede zwischen den einzelnen Lichtwellenleiter-Teilnehmeranschlußleitungen möglich macht.

Dieses bekannte Telekommunikationssystem ist ebenso auf die STM(Synchronous Transfer Mode)- Zeitmultiplextechnik für Schmalband-Dienste ausgerichtet wie ein weiteres derartiges (aus ISSLS'88, Conf. Papers 9.4.1...5) bekanntes passives optisches Telekommunikationssystem, für das zur Er- weiterung auf Breitbanddienste ein teilnehmerindi- vidueller Wellenlängenmultiplex sowie ein ATM- (Asynchronous Transfer Mode)-Betrieb auf einer gesonderten Wellenlänge genannt wird.

Die Erfindung stellt sich nun die Aufgabe, ein vorteilhaftes passives optisches Telekommunikationssystem anzugeben, das sowohl für Schmal- bandkommunikation als auch für Breitbandkommu- nikation Anwendung finden kann.

Die Erfindung betrifft ein passives optisches Telekommunikationssystem, in dem jeweils eine Mehrzahl von Teilnehmerstellen jeweils über eine eigene Lichtwellenleiter-Teilnehmeranschlußleitung mit einem optischen Verzweiger verbunden ist, der direkt oder auch über wenigstens einen weiteren optischen Verzweiger mit einem gemeinsamen Lichtwellenleiteranschluß der Vermittlungsstelle über einen Lichtwellenleiter-Bus verbunden ist; die- ses Telekommunikationssystem ist erfindungsge- mäß dadurch gekennzeichnet, daß die Signalübertragung von der Vermittlungsstelle aus zu den Teilnehmerstellen hin in einem ATM-Zellenstrom vor sich geht, aus dem jede Teilnehmerstelle nur die im Header mit einer ebendieser Teilnehmerstelle zugeordneten Kennzeichnung versehenen ATM- Zellen aufnimmt, und daß die Signalübertragung von den Teilnehmerstellen aus zur Vermittlungsstelle hin in einem TDMA-Verfahren mit ATM-Zellen vor sich geht, demzufolge eine Teilnehmerstelle jeweils nur nach vorheriger Aufnahme einer an sie adressierten ATM-Zelle ihrerseits eine ATM-Zelle nach einer solchen teilnehmerindividuell bemessenen Verzögerungszeit auszusenden vermag, die sich mit der Laufzeit der aufgenommenen ATM-Zelle und der Laufzeit der ausgesendeten ATM-Zelle zu einer für alle Teilnehmerstellen gleichen vorgegebenen Schleifenlaufzeit zwischen dem Aussenden einer von der betreffenden Teilnehmerstelle aufgenommenen ATM-Zelle durch die Vermittlungsstelle und dem Empfang der danach von der betreffenden Teilnehmerstelle ausgesendeten ATM-Zelle durch die Vermittlungsstelle addiert.

Die Erfindung, bei der für den Vielfachzugriff nur wenig Overhead-Kapazität benötigt wird, bringt neben dem Vorteil, in einem ATM-Netz die von den Teilnehmerstellen des passiven optischen Telekommunikationssystems gemäß der Erfindung zur Vermittlungsstelle gelangenden Nutzinformationen gleich in Form von ATM-Zellen weiterübermitteln zu können und damit die Durchgängigkeit der ATM-Technik zu gewährleisten, den weiteren Vorteil mit sich, jeder Teilnehmerstelle für deren Signalübertragung zur Vermittlungsstelle hin innerhalb bestimmter Grenzen eine beliebige Bandbreite zuordnen zu können, indem die Vermittlungsstelle entsprechend viele ATM-Zellen mit der Kennzeichnung der jeweiligen Teilnehmerstelle aussendet.

In weiterer Ausgestaltung der Erfindung können die von den Teilnehmerstellen zur Vermittlungsstelle hin ausgesendeten ATM-Zellen zeitlich komprimiert, d.h. in ihrer Bitrate etwas erhöht sein, um so zwischen den ATM-Zellen verschiedener Teilnehmerstellen Sicherheitsabstände zu haben.

In dem Telekommunikationssystem gemäß der Erfindung wird auch eine gute Ausnutzung der insgesamt verfügbaren Bandbreite dadurch ermöglicht, daß Lücken für das Einphasen von Teilnehmerstellen nur bei Bedarf in den ATM-Zellenstrom einzufügen sind; hierzu kann in weiterer Ausgestaltung der Erfindung die Vermittlungsstelle bei erstmaliger oder Wieder-Inbetriebnahme einer Teilnehmerstelle zur Bemessung der teilnehmerindividuellen Verzögerungszeit eine Anzahl von im Header mit der dieser Teilnehmerstelle zugeordneten Kennzeichnung versehenen (Maintenance-)ATM-Zellen aussenden und aus der bis zum Empfang einer daraufhin von der betreffenden Teilnehmerstelle ohne Verzögerung ausgesendeten Anzahl von (Maintenance-)ATM-Zellen vergehenden Zeit die zur Erzielung der vorgegebenen Schleifenlaufzeit erforderliche Verzögerungszeit bestimmen. Mit der Aussendung der an die einzuphasende Teilnehmerstelle adressierten (Maintenance-)ATM-Zellen bewirkt die Vermittlungsstelle zugleich eine kurzzeitige Unterbrechung des Stroms an andere Teilnehmerstellen gerichteter ATM-Zellen und damit auch des in umgekehrter Übertragungsrichtung fließenden ATM-Zellenstroms, so daß der Einphasvorgang nicht durch Zellenüberschneidungen gestört wird; die zu bzw. von den anderen Teilnehmerstellen zu übertragenden ATM-Zellen können in weiterer Ausgestaltung der Erfindung für die Dauer des Einphasvorgangs in Pufferspeichern zwischengespeichert werden, womit Informationsverluste vermieden werden.

In weiterer Ausgestaltung der Erfindung kann die Vermittlungsstelle die zwischen den empfangenen ATM-Zellen auftretenden Zeitlücken auf die Einhaltung vorgegebener Grenzen überwachen und bei deren Über-bzw. Unterschreiten die betreffende teilnehmerindividuelle Verzögerungszeit entsprechend modifizieren, womit Laufzeitänderungen während des Vertriebs ausgeregelt werden können.

Weitere Besonderheiten der Erfindung werden aus der nachfolgenden näheren Erläuterung eines Ausführungsbeispiels eines Telekommunikationssystems gemäß der Erfindung anhand der Zeichnung ersichtlich.

In der Zeichnung ist schematisch in einem zum Verständnis der Erfindung erforderlichen Umfang ein bidirektionales LWL-Telekommunikationssystem mit einem passiven (vorzugsweise Monomode-)LWL-Busnetz BPON dargestellt, das sich zwischen einer zentralen Telekommunikationsstelle, für die hier eine Vermittlungsstelle VSt steht, und einer Mehrzahl von dezentralen Telekommunikationsstellen, für die hier Teilnehmerstellen ...,TSt2, TSt3,... stehen, erstreckt. In diesem LWL-Telekommunikationssystem sind die Teilnehmerstellen ...,TSt2, TSt3,... über einen einfaserigen LWL-Bus OB mit einem gemeinsamen LWL-Multiplexanschluß der Vermittlungsstelle VSt verbunden; die teilnehmerindividuellen LWL-Anschlußleitungen OALI ...OALn mögen dabei über passive, d.h. nicht wellenlängenselektive, optische Verzweiger VI,...Vn mit dem zugehörigen LWL-Bus OB verbunden sein, und zwar entweder direkt, wie in der Zeichnung explizit dargestellt, oder auch über weitere derartige Verzweiger. Als optische Verzweiger können dabei beispielsweise Durchgangsmischer oder optische Richtkoppler Anwendung finden. Es ist auch möglich, für eine Mehrzahl von teilnehmerindividuellen LWL-Anschlußleitungen einen gemeinsamen optischen Verzweiger vorzusehen, wie dies an sich (z.B. aus EP-A2-0 171 080) bekannt ist und daher hier nicht näher dargestellt zu werden braucht.

In dem in der Zeichnung skizzierten Telekommunikationssystem ist zur Richtungstrennung ein Wellenlängengetrenntlagebetrieb (bidirektionaler Wellenlängenmultiplex) vorgesehen, indem zur Signalübertragung in Abwärtsrichtung von der zentralen Telekommunikationsstelle VSt zu den dezentralen Telekommunikationsstellen ..., TSt2, TSt3,... hin Licht einer beispielsweise im 1300-nm-Band liegenden ersten Wellenlänge λ1 und zur Signalübertragung in Aufwärtsrichtung von den dezentralen Telekommunikationsstellen ...,TSt2, TSt3,... zu der zentralen Telekommunikationsstelle VSt hin Licht einer etwas größeren, beispielsweise im 1500-nm-Band liegenden zweiten Wellenlänge λ2 verwendet wird. Hierzu sind in der die zentrale Telekommunikationsstelle bildenden Vermittlungs stelle VSt ein entsprechender, zweckmäßigerweise durch eine Laserdiode gebildeter elektrooptischer Wandler e/o und ein entsprechender, zweckmäßigerweise durch eine Avalanche-Photodiode gebildeter optoelektrischer Wandler e\0 vorgesehen, die mit dem zugehörigen LWL-Bus OB über ein wellenlängenselektives optisches Filter F, beispielsweise einen (z.B. aus US-A-4 790 616) bekannten, mit einem Interferenz-Strahlteiler versehenen optischen Weichenbaustein, verbunden sind.

In entsprechender Weise mögen, ohne daß dies in der Zeichnung noch näher dargestellt ist, auch die dezentralen Telekommunikationsstellen, nämlich die Teilnehmerstellen ...,TSt2, TSt3,..., mit elektrooptischen und optoelektrischen Wandlern versehen sein.

In dem skizzierten Telekommunikationssystem geht, wie dies auch in der Zeichnung angedeutet ist, die Signalübertragung von der Vermittlungsstelle VSt aus abwärts zu den Teilnehmerstellen ...TSt2, TSt3,... hin in einem ATM-Zellenstrom $Z_{down}$ vor sich. Jede (53 Bit-Oktetts umfassende) ATM-Zelle besteht aus einem (5-Oktett-)Steuerinformationsfeld (Header) und einem (48 Oktetts umfassenden) Nutzinformationsfeld. Teil des Headers ist der (16 Bits umfassende) sog. Virtual Path Identifier; ein anderer Teil des Headers ist das sog. Access Control Field.

In den ATM-Zellenstrom $Z_{down}$ können, wenn gerade keine Nutzinformation zu übertragen ist, Synchronisierzellen mit vorgegebenem Bitmuster zur Synchronisation der Teilnehmerstellen auf den jeweiligen Zellenanfang eingeblendet sein (sog. pure ATM); es ist aber auch möglich, daß der ATM-Zellenstrom $Z_{down}$ seinerseits in eine (z.B. SONET-)Zeitrahmenstruktur mit in bestimmten festen Abständen auftretenden Synchronisiersignalen (Overhead) eingebettet ist (sog. frame structured ATM).

Aus dem ATM-Zellenstrom $Z_{down}$ entnimmt jede Teilnehmerstelle TSt nur diejenigen ATM-Zellen, die in ihrem Header, vorzugsweise in dessen Virtual Path Identifier, mit einer eben dieser Teilnehmerstelle TSt zugeordneten Kennzeichnung adressiert sind. In der Zeichnung ist für vier ATM-Zellen des ATM-Zellenstroms $Z_{down}$ die Unterteilung in Header und Nutzinformationsfeld verdeutlicht, wobei mit den in den Headern dieser vier ATM-Zellen angegebenen Kennzeichnungen (3, 3, 2, n) angedeutet wird, daß die - Nutz informationen A und B tragenden - ersten beiden Zellen für die Teilnehmerstation TSt3 bestimmt sind, daß die - eine Nutzinformation C tragende - dritte Zelle für die Teilnehmerstelle TSt2 bestimmt ist und daß die - eine Nutzinformation D tragende - vierte Zelle für eine in der Zeichnung nicht mehr dargestellte, über die LWL-Teilnehmeranschlußleitung OALn erreichte Teilnehmerstelle bestimmt ist.

In der umgekehrten Übertragungsrichtung geht die Signalübertragung von den Teilnehmerstellen TSt aufwärts zur Vermittlungsstelle VSt hin in einem TDMA-Verfahren mit ATM-Zellen $Z_{up}$ vor sich, indem eine Teilnehmerstelle TSt jeweils nur nach vorheriger Aufnahme einer an sie adressierten ATM-Zelle des ATM-Zellenstroms $Z_{down}$ nun ihrerseits eine ATM-Zelle abzugeben vermag, und zwar nach einer teilnehmerstellenindividuell bemessenen Verzögerungszeit $\tau$. Diese in der Teilnehmerstelle TSt jeweils einzustellende Verzögerungszeit $\tau$ ist dabei so bemessen, daß sie sich mit der Laufzeit $t_{down}$ der ATM-Zellen von der Vermittlungsstelle VSt bis zu der betreffenden Teilnehmerstelle TSt und der Laufzeit $t_{up}$ von der betreffenden Teilnehmerstelle TSt bis zur Vermittlungsstelle VSt zu einer für alle Teilnehmerstellen ..., TSt2, TSt3, ... gleichen vorgegebenen Schleifenlaufzeit $T = t_{down} + \tau + t_{up}$ zwischen dem Aussenden einer von der betreffenden Teilnehmerstelle TSt aufzunehmenden ATM-Zelle durch die Vermittlungsstelle VSt und dem Empfang der danach von der betreffenden Teilnehmerstelle TSt ausgesendeten ATM-Zelle durch die Vermittlungsstelle VSt addiert. Von der Vermittlungsstelle VSt aus gesehen ist damit für alle Teilnehmerstellen ..., TSt2, TSt3, ... die gleiche Schleifenlaufzeit gegeben, so daß von den einzelnen Teilnehmerstellen ausgesendete ATM-Zellen sich auf dem LWL-Bus OB nicht aufgrund von Laufzeitunterschieden überschneiden; zusätzlich können die von den Teilnehmerstellen TSt zur Vermittlungsstelle VSt hin ausgesendeten ATM-Zellen auch noch -durch geringfügige Erhöhung ihrer Bitrate - zeitlich komprimiert sein, so daß zwischen den ATM-Zellen der einzelnen Teilnehmerstellen ...,TSt2, TSt3,... Sicherheitslücken liegen, wie sie auch in der Zeichnung kreuzschraffiert zwischen den von den Teilnehmerstellen TSt3 und TSt2 (sowie über die LWL-Teilnehmeranschlußleitung OALn) zur Vermittlungsstelle VSt hin ausgesendeten, Nutzinformationen a, b und c sowie d tragenden ATM-Zellen $Z_{up}$ angedeutet sind.

Die Verzögerungszeit $\tau$ zwischen der Aufnahme und dem nachfolgendden Aussenden einer ATM-Zelle wird für jede Teilnehmerstelle TSt bei deren (erstmaliger oder auch Wieder-)Inbetriebnahme individuell bemessen: Hierzu kann die Vermittlungsstelle VSt eine nach Maßgabe der maximalen Laufzeit vorgegebene Anzahl von unmittelbar aufeinanderfolgenden, im Header an die betreffende Teilnehmerstelle TSt adressierten ATM-Zellen aussenden, deren Nutzinformationstyp im Header als Maintenance Information gekennzeichnet ist.

Die zu initialisierende Teilnehmerstelle TSt antwortet nach Empfang dieser (Maintenance-)ATM-Zellen ohne Verzögerung ebenfalls mit (Maintenance-)ATM-Zellen, deren Nutzinformationstyp im Header als Maintenance Information gekennzeichnet ist. Aus der zwischen Senden und Empfang von (Maintenance-)ATM-Zellen liegenden Zeit bestimmt die Vermittlungsstelle VSt dann die zur Erzielung der vorgegebenen Schleifenlaufzeit T erforderliche Verzögerungszeit $\tau$ der betreffenden Teilnehmerstelle TSt.

Da beim Initialisieren einer Teilnehmerstelle TSt der nutzinformationtragende ATM-Zellenstrom für eine gewisse Zeit - bei einer maximalen Schleifenlaufzeit von z.B. 100 $\mu$s und einer Summenbitrate von 150 Mbit/s auf dem LWL-Bus OB z.B. für ca. 40 ATM-Zellen - unterbrochen wird, ist in dieser Zeit die zur Übertragung anfallende Nutzinformation in entsprechenden Zellenpuffern zwischenzuspeichern, die dann nach Beendigung des Einphasvorgangs wieder geleert werden können.

Während des Betriebes kann die Vermittlungsstelle VSt die zwischen den empfangenen ATM-Zellen $Z_{up}$ auftretenden Zeitlücken auf die Einhaltung vorgegebener Grenzen überwachen und bei deren Über- bzw. Unterschreiten die betreffende teilnehmerindividuelle Verzögerungszeit $\tau$ entsprechend modifizieren, so daß die Zeitlücken durch teilnehmerstellenindividuelles Nachregeln der Verzögerungszeit $\tau$ wieder auf den Sollwert gebracht werden können; hierzu kann die Vermittlungsstelle VSt der betreffenden Teilnehmerstelle TSt eine entsprechende Nachstellinformation im Access Control Field der an diese Teilnehmerstelle TSt adressierten, Nutzinformation tragenden ATM-Zellen $Z_{down}$ übermitteln.

Die Erfindung ist nicht daran gebunden, daß die Teilnehmerstellen TSt ATM-Schnittstellen, z.B. die standardisierte $T_B$-Schnittstelle mit 150 Mbit/s, aufweisen. Werden z.B. Teilnehmerstellen mit 64-kbit/s-Kanälen verwendet, so können ATM-Zellen jeweils aus dem Bitstrom eines jeden Kanals für sich gefüllt werden, was jeweils eine Zellenbildungszeit von 6 ms erfordert; es können aber auch die Bitströme aller Kanäle einer Teilnehmerstelle gemeinsam zur ATM-Zellenbildung genutzt werden, was die Zellenbildungszeit entsprechend verringert, für eine etwaige spätere Trennung der Kanäle im ATM-Netz jedoch besondere Maßnahmen erfordert. Weisen Teilnehmerstellen TSt die standardisierte $T_B$-Schnittstelle mit 150 Mbit/s auf, kann man aber davon ausgehen, daß vielen Teilnehmerstellen eine maximale Nutzbitrate von 10 Mbit/s genügt und sie somit jeweils nur einen Teil der 150-Mbit/s-Übertragungskapazität in Anspruch nehmen, so kann eine Mehrzahl von z.B. mehr als 10 solcher "mittelbandiger" Teilnehmerstellen in dem passiven optischen Telekommunikationssystem gemäß der Erfindung auf einen 150-Mbit/s-Port der Vermittlungsstelle VSt konzentriert, d.h. über den LWL-Bus OB an einem Anschluß der Vermittlungsstelle VSt zusammengeführt werden.

Wie oben schon erwähnt wurde, kann - innerhalb bestimmter Grenzen - jeder Teilnehmerstelle TSt eine beliebige Bandbreite zugeordnet werden, indem die Vermittlungsstelle VSt entsprechend viele ATM-Zellen an die jeweilige Teilnehmerstelle adressiert. Dabei kann jeder Teilnehmerstelle eine Maximalbitrate semipermanent zugeordnet sein, innerhalb derer für die betreffende Teilnehmerstelle TSt virtuelle Verbindungen zugelassen sind. Insoweit wirkt das Telekommunikationssystem gemäß der Erfindung dann als reines Multiplexsystem ohne vermittlungstechnische Konzentration. Wie dies in ATM-Netzen die Regel ist, kann beim Verbindungsaufbau aber auch die jeweilige Bitrate verbindungsindividuell ausgehandelt werden, so daß für jede Teilnehmerstelle TSt jeweils nur eine dem momentanen Bedarf entsprechende Bitrate bereitgestellt wird.

## Ansprüche

1. Passives optisches Telekommunikationssystem, in dem jeweils eine Mehrzahl von Teilnehmerstellen (TSt) jeweils über eine eigene Lichtwellenleiter-Teilnehmeranschlußleitung (OALl,..., OALn) mit einem optischen Verzweiger (Vl...Vn) verbunden ist, der direkt oder über wenigstens einen weiteren optischen Verzweiger mit einem gemeinsamen Lichtwellenleiteranschluß der Vermittlungsstelle (VSt) über einen Lichtwellenleiter-Bus (OB) verbunden ist,

**dadurch gekennzeichnet,**

daß die Signalübertragung von der Vermittlungsstelle (VSt) aus zu den Teilnehmerstellen (TSt) hin in einem ATM-Zellenstrom ($Z_{down}$) vor sich geht, aus dem jede Teilnehmerstelle (TSt) nur die im Header mit einer ebendieser Teilnehmerstelle (TSt) zugeordneten Kennzeichnung versehenen ATM-Zellen aufnimmt, und daß die Signalübertragung von den Teilnehmerstellen (TSt) aus zur Vermittlungsstelle (VSt) hin in einem TDMA-Verfahren mit ATM-Zellen ($Z_{up}$) vor sich geht, demzufolge eine Teilnehmerstelle (TSt) jeweils nur nach vorheriger Aufnahme einer ATM-Zelle ihrerseits eine ATM-Zelle nach einer solchen teilnehmerindividuell bemessenen Verzögerungszeit ($\tau$) auszusenden vermag, die sich mit der Laufzeit ($t_{down}$) der aufgenommenen ATM-Zelle und der Laufzeit ($t_{up}$) der ausgesendeten ATM-Zelle zu einer für alle Teilnehmerstellen (...,TSt2, TSt3,...) gleichen vorgegebenen Schleifenlaufzeit (T) zwischen dem Aussenden einer von der betreffenden Teilnehmerstelle (TSt) aufgenommenen ATM-Zelle durch die Vermittlungsstelle (VSt) und dem Empfang der danach von der betreffenden Teilnehmerstelle (TSt) ausgesendeten ATM-Zelle durch die Vermittlungsstelle (VSt) addiert.

2. Telekommunikationssystem nach Anspruch 1,
**dadurch gekennzeichnet,**
daß die von den Teilnehmerstellen (TSt) zur Vermittlungsstelle (VSt) hin ausgesendeten ATM-Zellen ($Z_{up}$) zeitlich komprimiert sind.

3. Telekommunikationssystem nach Anspruch 1 oder 2,
**dadurch gekennzeichnet,**
daß die Vermittlungsstelle (VSt) jeder Teilnehmerstelle (TSt) für deren Signalübertragung zur Vermittlungsstelle (VSt) hin eine bestimmte Bandbreite durch Aussendung einer entsprechenden Anzahl von an die betreffende Teilnehmerstelle (TSt) adressierten (Nutz- oder Leer-)AM-Zellen zuordnet.

4. Telekommunikationssystem nach einem der Ansprüche 1 bis 3,
**dadurch gekennzeichnet,**
daß die Vermittlungsstelle (VSt) bei erstmaliger oder Wieder-Inbetriebnahme einer Teilnehmerstelle (TSt) zur Bemessung der teilnehmerindividuellen Verzögerungszeit ($\tau$) eine Anzahl von im Header mit der dieser Teilnehmerstelle (TSt) zugeordneten Kennzeichnung versehenen (Maintenance-)AM-Zellen aussendet und aus der bis zum Empfang einer daraufhin von der betreffenden Teilnehmerstelle (TSt) ohne Verzögerung ausgesendeten Anzahl von (Maintenance-)ATM-Zellen vergehenden Zeit die zur Erzielung der vorgegebenen Schleifenlaufzeit (T) erforderliche Verzögerungszeit ($\tau$) bestimmt.

5. Telekommunikationssystem nach Anspruch 4,
**dadurch gekennzeichnet,**
daß für die Dauer der Inbetriebnahme einer Teilnehmerstelle (TSt) zu bzw. von anderen Teilnehmerstellen zu übertragende ATM-Zellen puffergespeichert werden.

6. Telekommunikationssystem nach einem der Ansprüche 1 bis 5,
**dadurch gekennzeichnet,**
daß die Vermittlungsstelle (VSt) die zwischen den empfangenen ATM-Zellen ($Z_{up}$) auftretenden Zeitlücken auf die Einhaltung vorgegebener Grenzen überwacht und bei deren Über- bzw. Unterschreiten die betreffende teilnehmerindividuelle Verzögerungszeit ($\tau$) entsprechend modifiziert.

7. Telekommunikationssystem nach einem der Ansprüche 4 bis 6,
**dadurch gekennzeichnet,**
daß die Vermittlungsstelle (VSt) einer Teilnehmerstelle (TSt) die jeweilige teilnehmerindividuelle Verzögerungszeit ($\tau$) im Header einer mit der dieser Teilnehmerstelle (TSt) zugeordneten Kennzeichnung versehenen ATM-Zelle signalisiert.

8. Telekommunikationssystem nach Anspruch 7,
**dadurch gekennzeichnet,**
daß die Verzögerungszeitsignalisierung im Access Control Field der ATM-Zelle übermittelt wird.

9. Telekommunikationssystem nach einem der vorhergehenden Ansprüche,
**dadurch gekennzeichnet,**
daß die der Teilnehmerstelle (TSt) zugeordnete Kennzeichnung im Virtual Path Identifier der ATM-Zelle übermittelt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | BRITISH TELECOMMUNICATIONS ENGINEERING, Band 7, Nr. 4, Januar 1989, Seiten 237-241, London, GB; K.A. OAKLEY et al.: "Passive fibre local loop for telephony with broadband upgrade" * Seite 237, rechte Spalte, Zeile 20 - Seite 238, linke Spalte, Zeile 3; Seite 238, rechte Spalte, Zeile 40 - Seite 239, linke Spalte, Zeile 25; Figur 1; Seite 240, linke Spalte, Zeilen 48-63 * --- | 1,3,4,6 ,7,8 | H 04 J 14/08 H 04 B 10/20 |
| A | IDEM --- | 9 | |
| Y | EP-A-0 337 619 (BRITISH TELECOM) * Seite 2, Zeilen 13-21; Seite 3, Zeilen 26-28; Seite 4, Zeilen 26-53; Seite 5, Zeilen 20-48 * --- | 1,3,4,6 -8 | |
| A | SIEMENS TELCOM REPORT, Band 11, Nr. 6, November/Dezember 1988, Seiten 210-213, Berlin & München, DE; A. LUTZ: "ATM ermöglicht unterschiedliche Bitraten im einheitlichen Breitbandnetz" * Seite 211, linke Spalte, Zeile 30 - Mittlere Spalte, Zeile 12 * --- | 1,2,5 | RECHERCHIERTE SACHGEBIETE (Int. Cl.5) H 04 J H 04 Q H 04 L H 04 B |
| A | EP-A-0 318 331 (BRITISH TELECOM) * Seite 5, linke Spalte, Zeilen 12-60; Seite 7, linke Spalte, Zeile 9 - rechte Spalte, Zeile 5; Seite 8, rechte Spalte, Zeilen 14-38,47-51; Seite 11, linke Spalte, Zeile 52 - rechte Spalte, Zeile 11 * --- -/- | 1,4,6 | |

Der vorliegende Recherchenbericht wurde für alle Patentansprüche erstellt

| Recherchenort | Abschlußdatum der Recherche | Prüfer |
|---|---|---|
| DEN HAAG | 04-07-1990 | VAN DEN BERG,J.G.J. |

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PROCEEDINGS OF THE INTERNATIONAL SYMPOSIUM ON SUBSCRIBER LOOPS AND SERVICES, Boston, MA, 11.-16. September 1988, Seiten 235-239, IEEE, New York, US; K. IGUCHI et al.: "Optical passive bus for broadband user-network interface" * Seite 736, recht Spalte, Zeile 5 - Seite 237, linke Spalte, Zeile 4; Seite 238, rechte Spalte, Zeilen 1-9 * ----- | 1-9 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 04-07-1990 | VAN DEN BERG,J.G.J. |

EPO FORM 1503 03.82 (P0403)